# EUROPEAN PATENT SPECIFICATION

(11) **EP 1 710 000 B1**
(45) Date of publication and mention of the grant of the patent: **11.11.2015**
(21) Application number: 04808988.2
(22) Date of filing: 30.11.2004
(51) Int. Cl.: A63F 5/02, H04N 7/00

(54) **AUTOMATIC IDENTIFICATION OF A ROULETTE WINNING NUMBER**
AUTOMATISCHE KENNZEICHNUNG EINER GEWINNZAHL BEIM ROULETTE
DETERMINATION AUTOMATIQUE DU NUMERO GAGNANT A LA ROULETTE

(30) Priority: 17.12.2003 RU 2003136186
(43) Date of publication of application: 11.10.2006
(73) Proprietor: Obshhestvo s Ogranichennoj Otvetstvennostju "SETEL", 195248, St. Petersburg (RU)
(72) Inventor: BELOZEROV, Boris Konstantinovich, St.Petersburg, 197342 (RU); POPOV, Dmitry Vladimirovich, St.Petersburg, 193231 (RU); SOKOLOV, Sergey Valerevich, St.Petersburg, 195176 (RU)
(74) Representative: Litvakova, Lenka
(86) International application number: PCT/RU2004/000482
(87) International publication number: WO 2005/058439

(56) References cited:
- WO-A2-99/48290
- DE-A1- 3 233 405
- FR-A1- 2 303 575
- GB-A- 2 084 830
- GB-A- 2 429 928
- JP-A- 2002 017 943
- RU-C1- 2 122 878
- US-A- 4 383 537
- US-A- 5 801 766

## Description

### Field of Invention

The present invention relates to equipment for a roulette game and can be used for automatic detection of the sector in which the ball has dropped.

### Background of the Invention

Known in the art are methods of detection of a winning number based on the use of light sources illuminating the number ring and the pocket ring of the roulette wheel and sensors for receiving reflected light signals mounted on the outer part of the roulette wheel, e. g. as disclosed in US No. 5836583 or RU No. 2211067. One limitation of these methods is the necessity of fine alignment of the analog equipment and another one is the delay in detection of the winning number at least by the duration of one roulette wheel revolution, which is due to waiting for the verification of the ball position.

Known in the art are methods of detection of a winning number based on the use of a video camera mounted on the outer part of the roulette wheel and generating video data on the number ring and the pocket ring, as disclosed in EP No. 1250688 and JP No. 2002017943. These solutions are free only from the first of the above-mentioned limitations.

The closest analogue of the present invention is the method of detection of a winning number in a roulette game disclosed in US No. 5801766 "Security System for Use at a Roulette Table" which is characterized in that that a monochromatic video camera is pointed at the roulette wheel, the video camera output signal containing video data on the roulette table including the initial ball spinning region, the number ring region and the pocket ring region is digitally converted, transmitted to the processor means, analyzed for detecting winning number, and a signal of the winning number is transmitted for displaying the result.

In doing so, while analyzing the signal, the initial ball spinning region, the number ring region and the pocket ring region are identified, the data on the pocket ring region in the absence of the ball is stored, the moment when the ball descends from the initial spinning region into the pocket ring region is detected and the angular position of the roulette wheel is determined, a conclusion about the number of the sector where the ball lies is drawn and the signal of the winning number is transmitted for further processing.

However, the accuracy of the described method which is reasonable for a security system is inadequate for detection of a winning member.

### Disclosure of the Invention

The object of the present invention is to provide a method that would enhance the reliability of detecting a winning number and achieve compactness of auxiliary equipment for a roulette game.

With this principal object in view there is provided a method of automatic detection of a winning number in a roulette game in which a colour video camera is mounted at the top of the indicator board and pointed towards the roulette wheel, the video camera output signal including video data on the pocket ring region is digitally converted, transmitted to processor means, analyzed for detecting, the winning number and the result is displayed on the indicator board. Due to the increase in the information content in the analyzed signal, the reliability of the winning number detection also increases. The location of the video camera at the top of the indicator board provides the compactness of the equipment and the convenience of mounting thereof.

In a specific case of the video camera output signal analysis, the pocket ring region is identified, the angular position of the roulette wheel is determined and the probabilities of the presence of the ball in a pocket are determined and stored for each pocket and the conclusion about the number of the sector where the ball lies is drawn using the stoned probabilities as the base.

In anther specific case of the roulette wheel with uncolored pockets the number ring region is additionally.

In another specific case the video camera output signal with video data on the roulette wheel is split into even-numbered and odd-numbered half-frames. Due to such doubling of the number of the blocks containing the total information about the roulette wheel and the ball condition, the reliability of the method increases. Moreover, the splitting of the video signal into half-frames enables elimination of the effects caused by the video camera interlacing.

### Brief Description of the Drawings

The preferred embodiment of the present invention will now be described with reference to the accompanying drawing in which:
Fig. 1 is a schematic illustration of the embodiment of the present invention;
Fig. 2 is a schematic view of a half-frame of video data (the roulette wheel);
Fig. 3 is a schematic view of the pixel-to-pixel of variance;
Fig. 4 is a schematic view of the pocket ring boundaries;
Fig. 5 is an example of the video signal representation to be used in the analysis;
Fig. 6 is a general flow diagram of the procedure of the video camera output signal analysis;
Fig. 7 is a flow diagram of the procedure of taking the decision;
Fig. 8 is a flow diagram of the pocket identification procedure;
Fig. 9 is a flow diagram of the procedure of the determining the pocket ring angular position;
Fig. 10 is a flow diagram of the procedure of storing the information about the luminance and the video signal preprocessing;
Fig. 11 is a flow diagram of the procedure of the determining and storing of the probabilities of the presence of the ball in a pocket.

Reference Numerals and Symbols Used in the Drawings:
1 is video camera;
2 is a roulette wheel;
3 is a ring of the pockets;
4 is a ring of the numbers;
5 is an indicator board;
6 is computer;
B is a black sector;
R is a red sector;
G is green sector;
H or 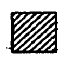 is a high level signal;
M or 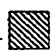 is a medium level signal;
L or 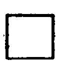 is a low level signal;

Symbols Used in the Flow Diagrams:
ballPresent is a criterion of the presence of the ball in a pocket;
numSector is the number of the pocket where the ball lies;
SZ is the number of pixels in a half-frame (768 x 288 for a half-frame of PAL standard digitalized by a BT878 processor);
N is the number of half-frames used for identification of the pocket ring region;
rgb[SZ*3] is an array for storing red, green and blue colour components of one video signal half-frame;
tmp[SZ] is an array for storing one colour component of one half-frame;
frames[N][SZ] is an array for storing red colour component of N half-frames;
disp[SZ] is an array for storing pixel-to-pixel variance;
points[SZ] is an array for storing the image of the pocket ring boundaries;
transform[9] are parameters of transformation of coordinates;
div is the integer division operation;
mod is the operation of taking the remainder of the integer division;
sgrt is the extraction of the square root;
^ is the operation of raising to power;
* is the operation of multiplication;
ys is the pocket ring image height;
xs is the pocket ring image width;
WIDE is the width of one pocket image; WIDE is taken to be ys, so, respectively, xs=37*ys; ys=14;
red[xs][vs] is the whole image of the red colour component of the pocket ring;
grn[xs][ys] 1is the whole image of the green colour component of the pocket ring;
line[xs] is the signal representing the result of summation of the red array over the columns;
line0[xs] is a centered signal derived from line;
ideal[xs] is a reference signal;
corr[xs] are counts of the correlation function between the centered and the reference signals;
pos is the horizontal position of the ZERO pocket in the whole image (the angular position of the pocket ring);
shift is the horizontal position of the first pocket in the whole image;
zero is the serial number of the ZERO pocket in the whole image;
speed is the rotational speed of the roulette wheel, i. e. the number of revolution in the time of generating one video signal half-frame;
period is the period of rotation of the roulette wheel which is the reciprocal of speed;
yᵢ=iir(yᵢ₋₁,xᵢ,w) is a IIR filter of the form yᵢ=(yᵢ₋₁*(w-1)+xᵢ)/w, where w>1;
tau is the time constant of the IIR filter;
wrk[xs][ys] is the whole image for storing information about the illuminance of the pockets;
stat[xs][ys] is the whole image with stored information about the illuminance of the pockets;
prep[xs][ys] is the whole image formed for detecting the presence of the ball;
nsect is the serial number of the analyzed pocket in the whole image;
n is the real number corresponding to the analyzed pocket;
numbers is an array which contains the pocket numbers in the order of their arrangement on the roulette wheel; for a roulette wheel with one zero pocket the numbers array takes the form of: 0, 32, 15, 19, 4, 21, 2, 25,17, 34, 6, 27, 13, 36, 11, 30, 8, 23, 10, 5, 24, 16, 33, 1, 20, 14, 31, 9, 22, 18, 29, 7, 28, 12, 35, 3, 26;
sect[xs][xs] is an image of one pocket which contains the video data from prep;
noball[xs][xs] is an image of one pocket which contains the video data from stat;
xc[37], yc[37], rc[37], are the parameters of the mathematical models (circles) for imaging the pockets (coordinates of the circle centers and radii, respectively);
xa[37], ya[37], ra[37] are stored parameters of the mathematical models;
razm[37] is the double amplitude of the time variation in the mathematical model parameters;
ro is the distance from the analyzed pixel to the circle centre;
brln is the total brightness of the pixels lying within the circle;
brOut is the total brightness of the pixels lying outside the circle;
nln is the number of pixels within the circle;
nOut is the number of pixels outside the circle;
resp[37] is the momentary probability of the presence of the ball in each pocket;
dost[37] in degree of certainly of the determination of the above-mentioned probability;
acc[37] is the stored probability of the presence of the ball in each pocket;
POROG is the probability threshold value used for taking the decision.

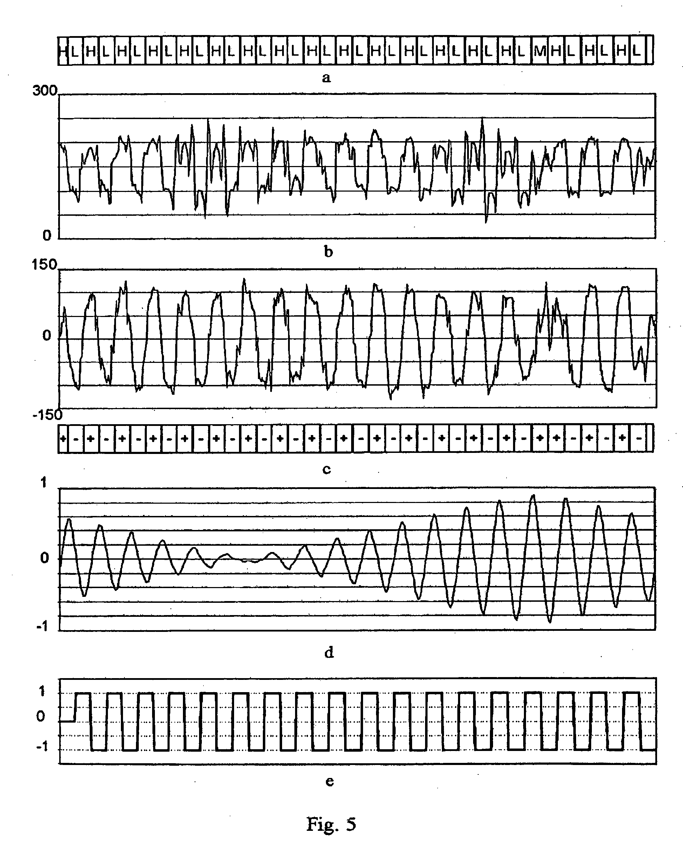

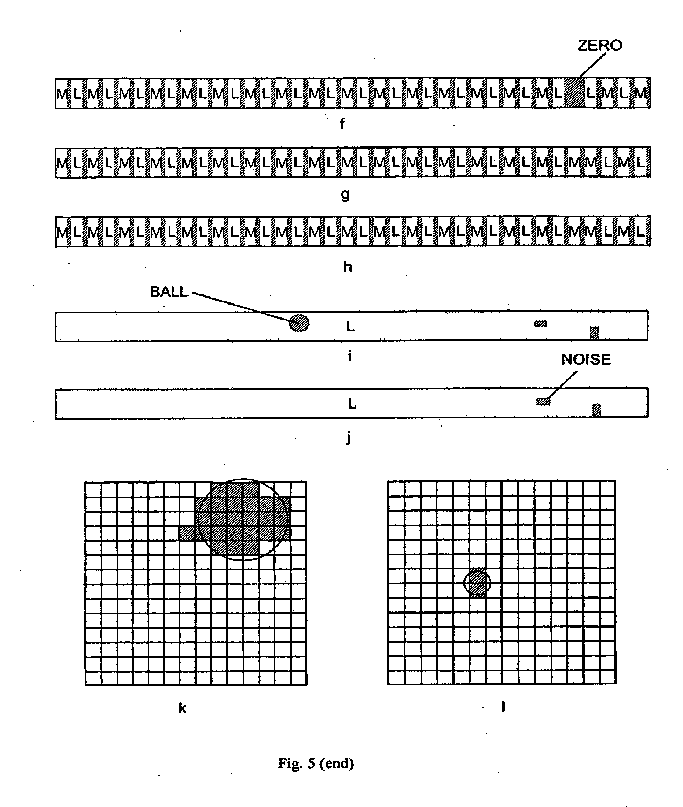

Symbols used in Fig. 5
a is a schematic representation of the red image;
b is a schematic representation of the line signal;
c is a schematic representation of the line0 signal;
d is a schematic representation of the corr counts;
e is a schematic representation of the ideal signal;
f is a schematic representation of the grn image;
g is a schematic representation of the wrk image;
h is a schematic representation of the stat image;
i is a schematic representation of the prep image with the ball in the pocket;
j is a schematic representation of the prep image in the absence of the ball in the pocket;
k is a schematic representation of the sect image in the presence of the ball;
I is a schematic representation of the sect image in the absence of the ball.

### Best Mode to Carry out the Invention and Industrial Applicability

The method can be carried out, for example, as follows.

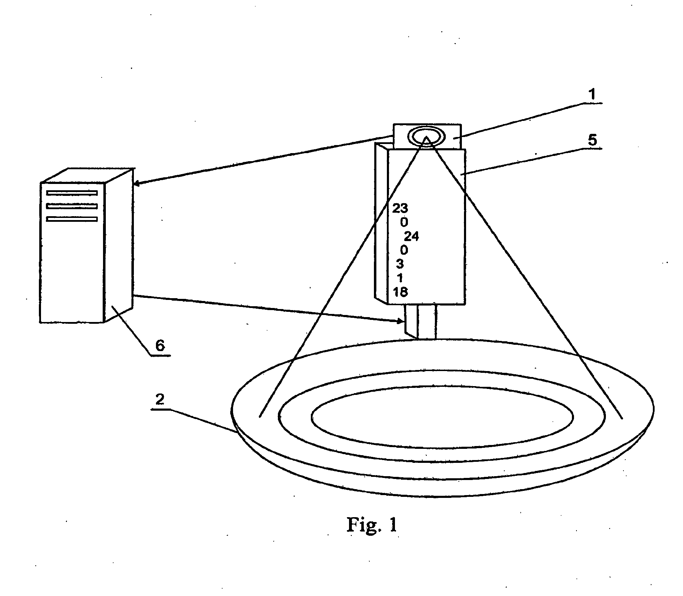

A colour video camera using interlacing means and output video signal of the PAL composite standard is mounted above the roulette wheel 2 so that its view could cover the pocket ring 3, e. g. at the top of the indicator board 5, as shown in Fig. 1. The video camera 1 can be mounted at different angles to the table surface: from 90°, when it is mounted above the roulette table to 30°, when it ceases viewing the pocket ring 3.

The signal at the output of the video camera including video data on the roulette wheel split into even-numbered and odd-numbered half-frames is digitally converted and transmitted into a processor. In doing so known and traditional for most video cameras means of PAL television standard are used (also SECAM or NTSC standards are possible). The least block that contains information about the scene being observed is a frame. All the standards are characterized in transmitting image by alternating lines, i.e. at first all the even-numbered lines (referred to as an even-numbered frame field or an even-numbered half-frame) are transmitted and then all the odd-numbered lines (referred to as an odd-numbered frame field or an odd-numbered half-frame). While forming video signal for an odd-numbered half-frame the video camera stores video data for an even-numbered half-frame. While forming video signal for an even-numbered half-frame, the video camera stores video data for an odd-numbered half-frame. That is to say, the alternating line nature of video signal causes interlacing by a video camera. Thus, the video data contained in one frame can be split into two blocks: even-numbered and odd-numbered half-frames. The video data contained in these blocks correspond to the state (or the image) of the scene being observed at different instants of time (for the PAL standard the time interval between them is 1/50 second). If in the scene being observed some moving objects are present, they will take different positions in even-numbered and odd-numbered half-frames (that is so called interlacing or the "comb effect"). In the case when the observed scene is a spinning roulette wheel and a moving ball, this effect manifests itself strongly enough. In this case, the video data that fit better the state of the roulette wheel and the ball contains each of the half-frames rather than the whole frame. Thus, the number of the blocks to be further analyzed that contain the information about the roulette wheel and the ball is doubled and the video data in each block is improved.

Digital conversion of the data consists in time sampling and subsequent signal amplitude quantization. Digital conversion of the video signal portion corresponding to one line of the image results in a sequence of quantized brightness levels of the pixels in the image of this line.

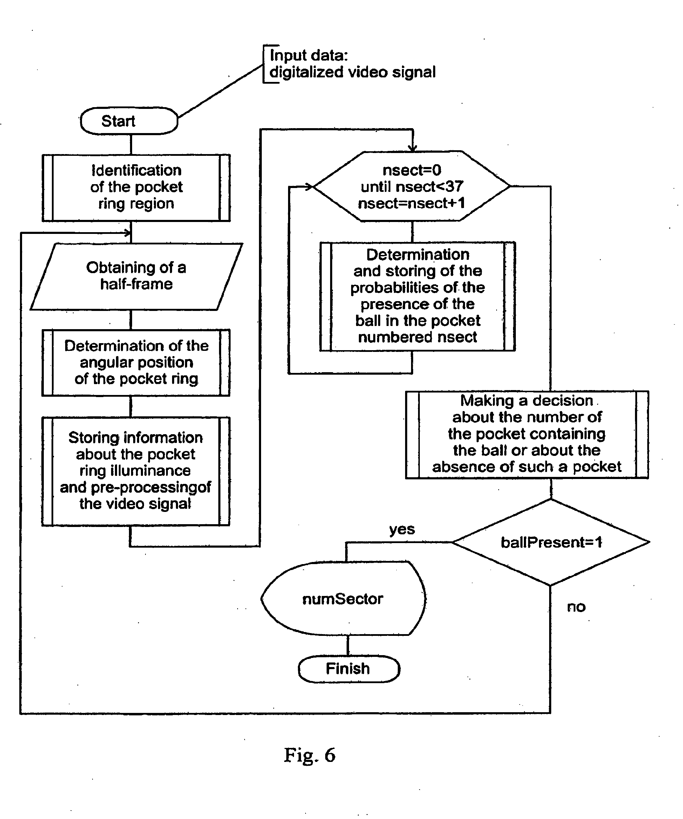

According to the flow diagram in Fig. 6, the analysis in the computer 6 comprises the following operations.

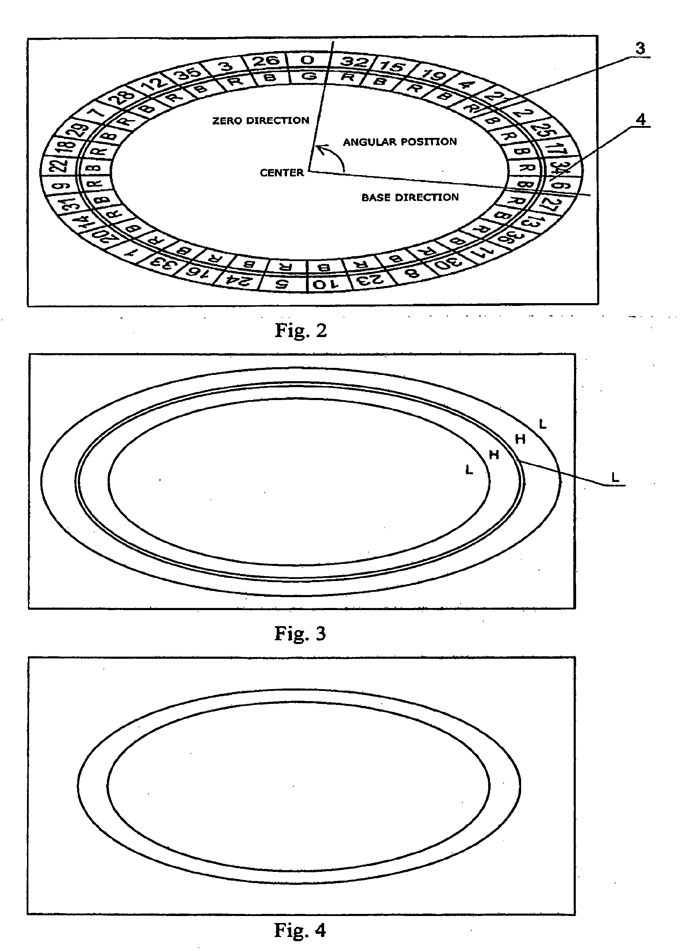

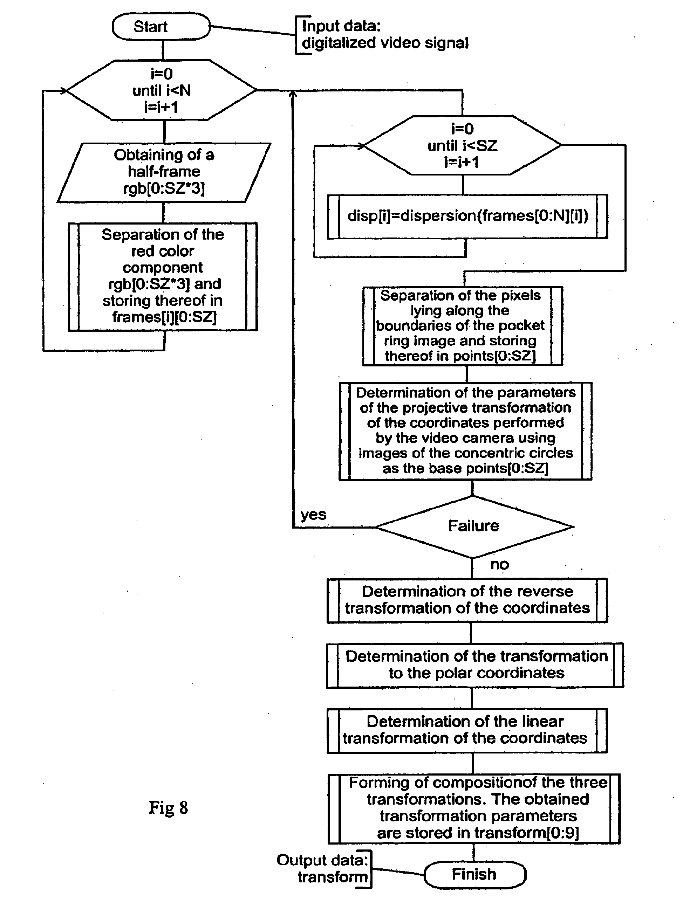

According to the flow diagram in Fig. 8, identification of the region of the pocket ring 3 assumes determination of the portion of the video signal which contains useful information about the presence of the ball in the pocket and about the angular position of the spinning part of the roulette wheel 2. Moreover, the video signal is transmitted from the coordinate system tied to the video camera to the coordinate system tied to the pocket ring. Further, the term "image" will be applied to the video signal transformed to the coordinate system tied to the pocket ring. Also, the term "image of an object" will mean the part of an image that contains the video data on that object. Also, the term "image of a colour component" will mean the part of an image that contains the video data corresponding to that colour component. Also, further, the term "the whole image" will mean the image of the region of the pocket ring 3. Then, the following operations are performed for N half-frames: writing half-frames in the rgb array, separating the red colour component of the half-frames and writing it in the frames array element next in turn. The pockets and the associated numbers are of three colours: black, red and one zero pocket is green. In the red colour component black pockets have a low level of brightness, red pockets have a high and the green pocket has a medium level of brightness. With the roulette wheel spinning, the pixels in the half-frame corresponding to the pocket ring and the number ring vary in brightness from low level to high level while all the other pixels have constant level of brightness. The variance (the central second order moment) of brightness is calculated for each pixel in the half-frame and the result is stored in the disp array. Since variance is a measure of the brightness spread, the pixels corresponding to the pocket ring and the number ring will have high variance while all the other pixels will have near to zero variance (Fig. 3). The pixels corresponding to the inner ring are selected from the disp array while all the other ones are deleted. This set of pixels corresponds to the pocket ring and describes the desired part of the video signal. Though, it is inconvenient to deal with the video signal that is represented in the original form. The most convenient form of representation of the video data on the pocket ring is a rectangular array in which all the pockets are rectangular and of equal width. The video signal transformation into such a form is formed. For this purpose, pixels from the disp array in the vicinity of which there are pixels both with high value of brightness and with low value of brightness are selected and stored in the points array. The obtained set of pixels represents the pocket ring boundaries. The optical system of the videocamera performs projective transformation of coordinates from a three-dimensional coordinate system of the scene being observed into a two-dimensional coordinate system tied to the sensitive to light matrix (referred to as M), and in particular, from two-dimensional coordinate system tied to the plane of the pocket ring (referred to as T) to the coordinate system M. This transformation is described by five parameters: {xp,yp,a,b,d}: two coordinates of the intersection of the principal optical axis of the lens with the plane of the pocket ring (xp,yp), angle of slope of the principal optical axis (a); angle of rotation of the sensitive to light matrix about the principal optical axis (b) and the distance from the camera to the plane of the pocket ring (d). Further, a reverse transformation is formed with the same set of parameters.

A criterion for estimation of the reverse transformation with unspecified values of the parameters is developed. For this purpose, the reverse transformation of the coordinates of all non-zero pixels from the points array is applied; the coordinates of the obtained pixels are approximated by two concentric circles by means of methods of regression analysis and the root-mean-square deviation of the pixels from the obtained circles is calculated. If the parameters {xp,yp,a,b,d} are consistent with the parameters of the camera transformation, the reverse transformation will transform the pixels from points array from the coordinate system M into the pixels lying along the boundaries of the pocket ring in the coordinate system T. The pocket ring boundaries in the coordinate system T take the form of two concentric circles and the root-mean-square deviation of their coordinates from the approximating curves will be close to zero. Applying numerical minimization methods (simplex method), the parameters {xp,yp,a,b,d} which minimize the value of estimation criterion can be determined. In this case, the direct transformation with the obtained parameters will be the true transformation performed by the video camera optical system. Reverse transformation with the determined parameters is applied to all the coordinates of non-zero pixels from the points array. The obtained pixels are approximated by two concentric circles. The approximation parameters are {x0,y0,r1,r2} i.e. the centre and the radii of the circles in the coordinate system tied to the plane of the pocket ring. Using the parameters {x0,y0}, transformation from the orthogonal coordinate system T in the plane of the pocket ring into the polar coordinate system (P) tied to the obtained circles in the plane of the pocket ring is formed.

After applying the determined transformation to the initial video signal, the pocket ring region will appear as a rectangle with the vertexes (R=r1,phi=0) and (R=r2,phi=2*PI).

Linear transformation of the coordinates with the parameters {r1,r2}; x=xs*phi/(2*PI), y=ys*(R-r1)/(R-r2), is formed.

After applying this transformation to the obtained region, it is transformed into a rectangle with the vertexes (x=0;y=0) and (x=xs;y=ys).

A composition of three transformations is formed:
- reverse transformation from M into T parameters {xp,yp,a,b,d};
- transformation from T into P with parameters {x0,y0};
- linear transformation with parameters {r1,r2}.

The obtained transformation with parameters {xp,yp,a,b,d,x0,y0,r1,r2} will be referred to as transform. The calculated parameters are stored in the transform array. Further, "the term" applying the transform transformation will mean the applying the obtained transformation with the parameters from transform array. Applying of this transformation to all pixels in a half-frame results in a set of pixels that is the image of the pocket ring in the desired form, as illustrated in Fig. 5a.

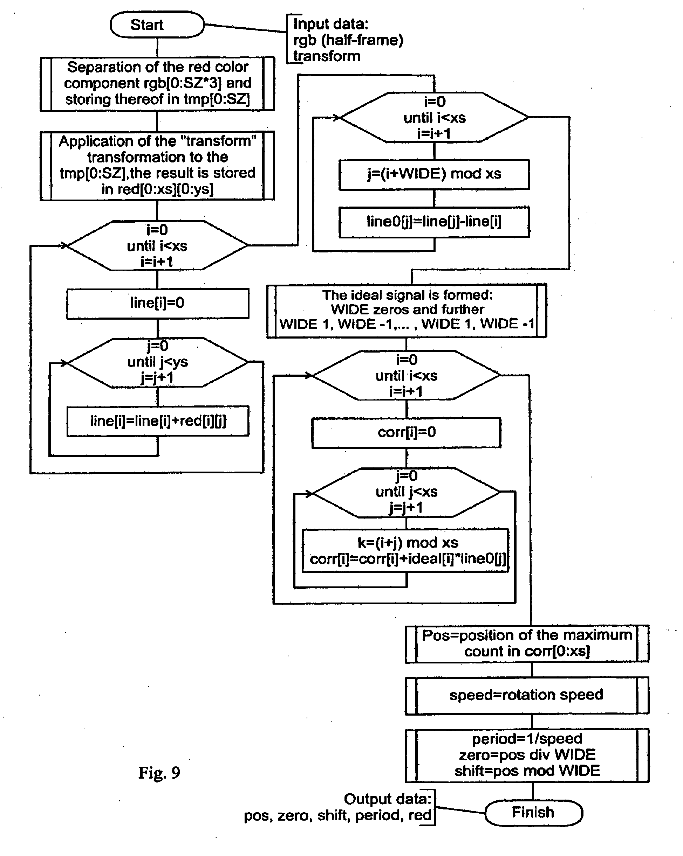

In order to determine the angular position of the pocket ring (Fig. 9), a half-frame is stored in the rgb array, the red colour component of the half-frame is separated and stored in the tmp array. The transform transformation is applied to the pixels from the tmp array and the results is stored in the red image. The red image obtained by the transformation is a rectangle comprising 37 identical rectangular regions which are images of the pockets (Fig. 5a). The images of red pockets have a high brightness level, black pocket images have a low level and the green pocket image has a medium brightness level. One-dimension signal defining the variations in the image brightness from one pocket to another one (Fig. 5b) is formed by summing the brightness values of the red image over the columns and storing the result in the line array. High level signal corresponds to red pockets, low level signal corresponds to black pockets and medium level signal corresponds to ZERO. Peaks at the pocket boundaries are due to the shining metal separations between pockets. In order to eliminate the peaks and to center the signal, the signal is shifted iteratively to the left by one pocket width WIDE, is subtracted from the initial signal and the result is stored in the line0 array. The obtained signal is centered (i.e. it has zero mean value) and it is represented in Fig. 5c. High level signal corresponds to red pockets, low level signal corresponds to black pockets and the signal level corresponding to ZERO is not generally.

A reference signal ideal (Fig. 5e) that has levels equal to 1, -1 and 0 which alternate in conformity with the pocket positions is formed (-1 corresponds to a black pocket , 1 corresponds to a red pocket and 0 corresponds to the green one). The correlation function for the line0 and ideal signals is calculated and the result is stored in corr (Fig. 5f).

The maximum position pos of the correlation function represents the horizontal position of ZERO in respect to the left edge of line0 (and the whole image). This value is considered to be the angular position of the pocket ring.

Using pos and its preceding values as the base and applying linear regression equation, speed is calculated as the rate of pos variation with time, or, what is the same, as the rotation speed of the roulette wheel, the result being stored in speed. Then period=1/speed is calculated. Proceeding from the relationship pos=zero*WIDE+shift, where WIDE is the pocket image width, the horizontal shift of the first pocket in the whole image is calculated, the result being stored in shift, then the serial number of the ZERO pocket in the whole image is calculated, the result being stored in zero. On the base of the information about the ZERO pocket position in the whole image and the particular order of the number sequence (which is the same for all roulette wheels with one zero), the pockets in the whole image can be associated with their true numbers.

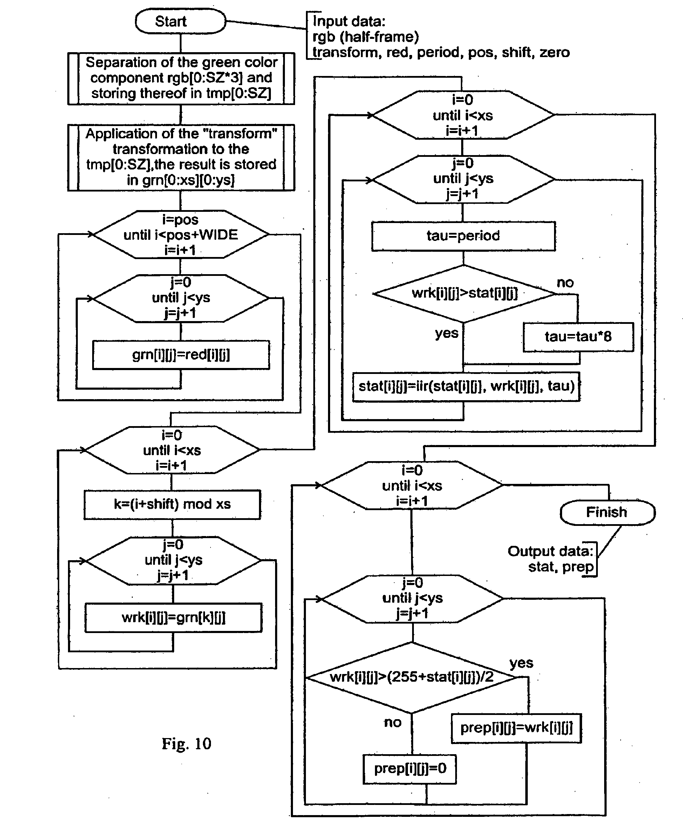

Storing of information about the illuminance of the pocket ring and pre-processing of the video signal is performed according to the procedure in Fig. 10. A half-frame is stored in the rgb array, the green color component of the half-frame is separated and stored in the tmp array. The transform transformation is applied to the pixels from tmp array, the result being stored in the grn image. The grn image obtained as a result of the transformation is a rectangle comprising 37 equal rectangular regions which are the pocket images (Fig. 5f). Images of red pockets have a medium brightness level, images of the black ones have a low brightness level and the image of the green pocket has a high brightness level, regions with high brightness level which can occur at the boundaries of the pockets are the images of the metal separators. It should be noted, that the ZERO pocket image has a high brightness level and the ball cannot be distinguished against this background. The grn image data are substituted by the red image data for the pixels corresponding to the green sector (the horizontal coordinate from shift+zero*WIDE to shift+(zero+1)*WIDE). After that the ZERO image in grn acquires a medium brightness level and the ball will become distinguishable.

The grn image is shifted iteratively to the left by the shift value in order to align it on the pocket boundary, the result being stored in wrk. This allows to achieve the unaltered position of the separators in the wrk image irrespective of their initial position in the grn image.

Next, a one-dimension filter with an infinitely pulse characteristic (IIR filter) defined recurrently as yᵢ=(yᵢ₋₁*(w-1)+xᵢ)/w, where w>1, is applied repeatedly. Further, the notation y = iir(y,x,w) will be used. The parameter w is a time constant and defines the sensitivity of the filter y output to the input data xᵢ; the greater w the less sensitivity.

The IIR filter is applied to all pixels in wrk image as follows: stat[i][j]=iir(stat[i][j],wrk[i][j],tau). If stat[i][j]<wrk[i][j], the value of the tau is equal to period, which corresponds to using the video data in the space of one roulette wheel revolution while performing filtration. If stat[i][j]>wrk[i][j], the value of tau is equal to 8*period, which corresponds to using the video data in the space of eight roulette wheel revolution while performing filtration.

Using data in the space of more than one roulette wheel revolution ensures that the presence of the ball in a pocket will not produce perceptive effect on the filtration result. Selection of different time constants depending on the relationship between the brightness levels in the initial and resulting images provides storing the highest possible values of the wrk image in the stat image (Fig. 5h).

The stat image is a reference one in the sense that the pixels of the wrk image representing the ball image exceed the corresponding pixels of the stat image in brightness while all the other pixels in wrk image are not as bright as the corresponding pixels in stat.

The prep image is filled with the pixels of zero brightness. The values of wrk[i][j] that are closer to the maximum possible brightness than to the corresponding values of stat[i][j] are stored in prep. Non-zero values of prep appear either at the ball location (Fig. 5i) or at the points of noise interference (Fig. 5j).

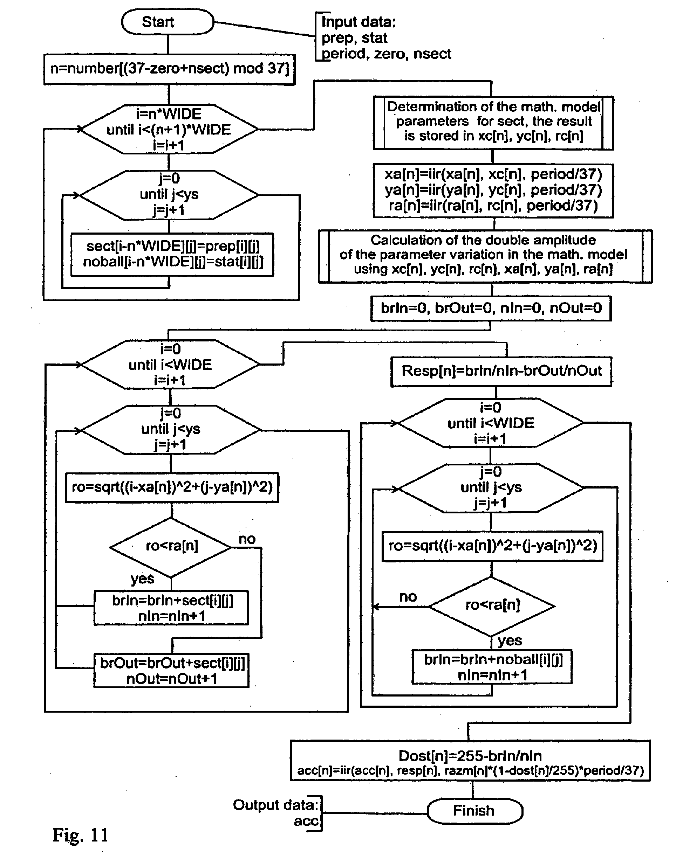

The probability of the presence of the ball in every pocket is determined and stored according to the procedure in Fig. 11. The serial number of a pocket in the image is determined for every pocket in the prep image and the result is stored in nsect. The number in the number ring associated with that pocket is calculated n=numbers[37-zero+nsect]mod37]. The data on that pocket are separated from the prep image and stored in the sect array (Fig. 5k and Fig. 5l). The data on that pocket are also separated from the stat image and stored in the noball array. Since the image of the ball in a pocket looks like a bright circle against dark background, the mathematical model for description of the ball image is chosen to be a circle with the centre coordinates (x,y) and the radius r.

The centre of mass is calculated for all pixels of the sect array: x0=sum(xᵢ*brᵢ)/sum(brᵢ), where sum is a summation operator, xᵢ is the horizontal coordinate of the i-th pixel and brᵢ is the brightness of the i-th pixel.

y0=sum(yᵢ*brᵢ)/sum(brᵢ), where sum is a summation operator, yᵢ is the vertical coordinate of the i-th pixel and brᵢ is the brightness of the i-th pixel.

The mean deviation of the pixels from their centre of mass is calculated:
r0=2*sum(sqrt((yᵢ-y₀)^2+(xᵢ-x0)^2*brᵢ)/sum(brᵢ), where sum is a summation operator sort is a square root operator, yᵢ is the vertical coordinate of the i-th pixel; xᵢ is the horizontal coordinate of the i-th pixel and brᵢ is the brightness of the i-th pixel.

These values will serve as parameters for a mathematical model for a particular pocket, they are stored in xc[n], yc[n] and rc[n].

Futher, a IIR filter is applied to the obtained data:
xa[n]=iir(xa[n],xc[n],period/37)
ya[n]=iir(ya[n],yc[n],period/37)
ra[n]=iir(ra[n],rc[n],period/37)

The time constant is chosen so, that storing of the mathematical model parameters is performed including the video data in the space of the rotation of the roulette wheel by one pocket. At the same time, the total deviation of the current parameters from the stored ones is calculated and stored in raz. The mean deviation of the parameters is stored (the double amplitude of their variation with time):
razm[n]=iir(razm[n],raz[n],period/37)

The ball, after it has dropped into a pocket, is stationary in relation to the pocket and the mathematical model parameters thereof are stationary as well, so the greater the value razm[n], the less the probability of the presence of the ball in the pocket.

The mean brightness of the pixels from sect lying within the circle (xa[n],ya[n],ra[n]) and the mean brightness of the pixels lying outside the circle are calculated and their difference is stored in resp[n] which represents the probability of the presence of the ball in pocket n. In case when the ball is really in the pocket, the brightness of the inside pixels will be high while the brightness of the outside ones will be low, which results in resp[n] containing the value close to maximum possible brightness. In case when the pocket does not contain the ball and there is no noise interference, the brightness of the inside and the outside pixels will be low, which results in resp[n] containing the value close to zero. In case when the pixels does not contain the ball but the noise interference is present, the brightness of the inside and the outside pixels will be non-zero, but it will be cancelled out by the subtraction, which at worst results in resp[n] containing a small positive value.

The mean brightness of pixels from noball lying within the circle (xa[n],ya[n],ra[n]) is calculated and subtracted from the value of the maximum possible brightness (255), the division being stored in dost[n] that represents the degree of certainly of resp[n] determination.

The higher the image brightness level in the absence of the ball, the smaller amplitude the legitimate signal will have and the less certain the conclusion based thereupon will be. The probability of the presence of the ball in pocket n is stored: acc[n]=iir(acc[n],resp[n],razm[n]*(1-dost[n]/255)*period/37).

The time constant is chosen so that the storing is performed including the video data in the space of rotation of the roulette wheel by one pocket and using the degree of certainty of the current value of resp[n] (the values that have small degree of certainty are taken into account to a less extent).

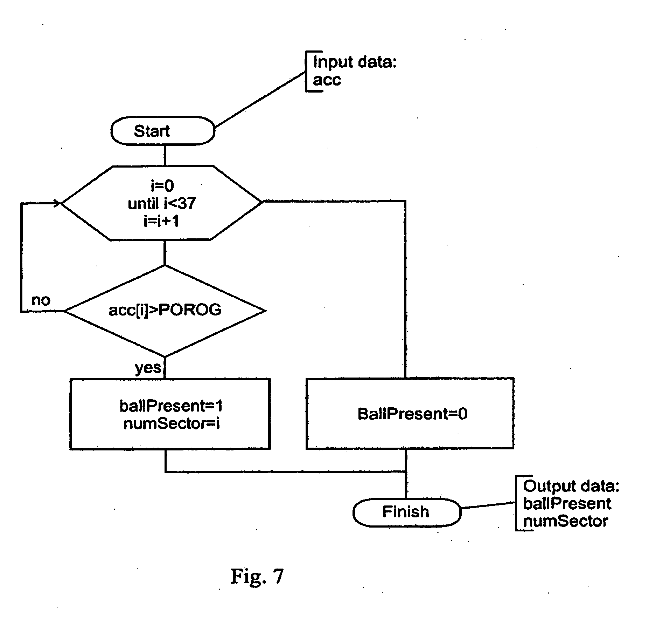

The decision about the number of the winning pocket is drawn on looking through the array of the stored probabilities (Fig. 7). The value POROG chosen experimentally assuming that it is the least of the values with which false operations of the system do not occur. Such choice of the POROG value provides the least response time in the absence of false results. If any probability is higher than the predetermined POROG value, a decision is taken about the presence of the ball in that pocket: the value ballPresent is set equal to 1 and the number of the winning pocket is written in the variable numSector.

The result obtained due to the analysis is displayed on the indicator board 5.

The above-described procedure can be used for determination of the winning number in a modification of roulette game with uncolored pockets. In this case the procedure modification consists in identification of the color region of the number ring 4 and, using thereof for analysis in addition to the pocket ring 3 region, in a similar way.

## Claims

1. A method for detecting a winning number in a roulette game, wherein a color video camera (1) is mounted at the top of an indicator board (5) and pointed towards the roulette wheel (2), the video camera (1) output signal containing video data on the roulette wheel (2) including the pocket ring (3) region is digitally converted, transmitted to processor means (6), analyzed for determining the winning number, the result being displayed on the indicator board (5) and wherein while analyzing the video camera (1) output signal, the pocket ring (3) region is identified, the angular position of the roulette wheel (2) is determined, the probabilities of the presence of the ball in a pocket are calculated and stored for every pocket, the conclusion about the number of a sector where the ball lies being drawn using the stored probabilities and wherein the video camera (1) output signal containing the video data on the roulette wheel (2) is split into even-numbered and odd-numbered half-frames which are analyzed separately in dynamic processes.

2. A method according to claim 1, wherein the video data on the roulette wheel (2) include additionally a number ring (4) region, and while analyzing the video camera (1) output signal, the number ring (4) region is additionally analyzed.

3. A method according to claim 1, wherein while analyzing the video data in dynamic processes, a difference in brightness level of red pockets, black pockets and green pocket is used.

4. A system for carrying out a method according to any one of claims 1-3.

## Patentansprüche

1. Verfahren zum Nachweis einer Gewinnzahl in einem Roulette-Spiel, wobei eine Farbvideokamera (1) oben an einer Indikatortafel (5) befestigt wird und gerichtet auf dem Roulettekessel (2), das Ausgangssignal der Videokamera (1) mit enthaltenden Videodaten aus dem Roulettekessel einschließlich Ringbereich (3) mit den Kammern digital umgewandelt wird, in die Prozessoreinrichtung übertragen wird, zur Bestimmung der Gewinnzahl analysiert wird, das Ergebnis auf der Indikatortafel (5) angezeigt wird, und wobei während der Analyse des Ausgangssignals der Videokamera (1), das Ringbereich (3) mit den Kammern identifiziert wird, die Winkelposition der Roulettekessel (2) bestimmt wird, sind die Wahrscheinlichkeiten für die Anwesenheit der Kugel in einer Kammer für jede Kammer berechnet und gespeichert, die Schlussfolgerung über die Nummer des Sektors, wo die Kugel liegt, unter Verwendung der gespeicherten Wahrscheinlichkeiten abgeleitet wird, und wobei das Ausgangssignal der Videokamera (1) mit enthaltenden Videodaten aus dem Roulettekessel (2) in geraden und ungeraden Halbbildern aufgeteilt wird, und während der Analysierung des Ausgangssignals der Videokamera (1) die geraden und ungeraden Halbbildern in separate dynamische Prozessen analysiert werden.

2. Das Verfahren nach Anspruch 1, wobei Videodaten auf dem Roulettekessel (2) zusätzlich ein Nummerringbereich (4) umfassen und während der Analysierung des Ausgangssignals der Videokamera (1) die Nummerringbereich (4) zusätzlich analysiert wird.

3. Das Verfahren nach Anspruch 1, wobei während der Analysierung den Videodaten in dynamischen Prozessen eine Differenz in Helligkeit den roten Kammern, schwarzen Kammern und grüne Kammer verwendet wird.

4. Das System zur Realisierung des Verfahren nach jeden den Ansprüchen 1-3.

## Revendications

1. Le procédé de détecter le numéro gagnant à la roulette où caméra vidéo (1) en couleurs est installée en haut du panneau indicateur (5) et orientée vers le cylindre (2) de roulette, le signal de sortie de la caméra vidéo (1) contenant les données vidéo du cylindre (2) de roulette y compris la zone de la numérotation (3) avec les cases est digitalisé est transmis aux moyens de processeur (6), analysé pour déterminer le numéro gagnant, le résultat est visualisé sur le panneau indicateur (5) et pendant le processus de l'analyse du signal de sortie de la caméra vidéo (1), la zone de la numérotation (3) avec les cases est identifiée, la position angulaire du cylindre (2) de roulette est déterminée, les probabilités de la présence de la bille en case sont calculées et sauvegardées pour chaque case, la conclusion portant sur le numéro du secteur dans lequel se trouve la baille est dérivée en utilisant les probabilités sauvegardées et le signal de sortie de la caméra vidéo (1) avec les données vidéo du cylindre (2) de roulette est divisé en demi-cadres paires et impaires et les demi-cadres paires et impaires sont analysées séparément en processus dynamiques.

2. Le procédé en revendication 1 où les données vidéo sur le cylindre (2) de roulette comportent aussi la zone du cercle de numéros (4) et au course de l'analyse du signal de sortie de la caméra vidéo (1) la zone du cercle de numéros (4) est analysée aussi.

3. Le procédé en revendication 1 où pendant l'analyse des données vidéo en processus dynamiques la différence en niveau de la luminosité des cases rouges, noires et de la case verte est utilisée.

4. Le système de réalisation du procédé selon quelconque des revendications 1 - 3.
